# FASCICULE DE BREVET EUROPEEN

(11) **EP 0 883 464 B1**
(45) Date de publication et mention de la délivrance du brevet: **29.08.2001**
(21) Numéro de dépôt: 97906240.3
(22) Date de dépôt: 21.02.1997
(51) Int. Cl.: B23Q 11/00

(54) **COULANT PORTE ELECTRO-BROCHE D'UNE MACHINE-OUTIL D'USINAGE A GRANDE VITESSE**
ELEKTROSPRUDELTRÄGER FÜR WERKZEUGMASCHINE FÜR HOCHGESCHWINDIGKEITSBEARBEITUNGEN
ELECTRIC SPINDLE HOLDER SLIDE FOR A HIGH-SPEED MACHINE TOOL

(30) Priorité: 22.02.1996 FR 9602373
(43) Date de publication de la demande: 16.12.1998
(73) Titulaire: Renault Automation Comau, 92365 Meudon La Forêt Cedex (FR)
(72) Inventeur: AZEMA, André, F-81710 Saix (FR)
(74) Mandataire: Richebourg, Michel François
(86) Numéro de dépôt international: FR9700323
(87) Numéro de publication internationale: WO9730820

(56) Documents cités:
- EP-A- 0 223 913
- FR-A- 2 543 032
- PATENT ABSTRACTS OF JAPAN vol. 011, no. 102 (M-576), 31 Mars 1987 & JP 61 252044 A (TOSHIBA MACH CO LTD), 10 Novembre 1986,

## Description

La présente invention a trait au domaine des machines-outils et concerne plus particulièrement des adaptations permettant d'assurer l'usinage de pièces à grande vitesse dans les meilleures conditions.

L'usinage à grande vitesse de pièces par une machine-outil s'opère en général à partir d'un outil entraîné en rotation par l'axe moteur d'une électro-broche installée dans un coulant lui-même monté mobile en translation selon trois axes X, Y et Z.

Une machine-outil comporte classiquement trois postes de travail principaux, à savoir :
- un poste d'usinage proprement dit comportant l'outil entraîné en rotation par l'axe moteur de l'électro-broche et façonnant la pièce à usiner,
- un poste d'entraînement situé en amont du poste d'usinage et constitué d'un ensemble d'organes assurant notamment les déplacements en translation suivant X, Y et Z du coulant de l'électro-broche ainsi que l'alimentation de l'électro-broche pour la rotation de son axe porte outil,
- et un poste de commande collaborant avec le poste d'entraînement et en fonction d'un programme d'instructions préétablies pour assumer les différentes phases d'usinage de ladite pièce.

*De par son expérience dans le domaine de l'invention,* la demanderesse a constaté, lors d'un usinage à grande vitesse, que la rotation à très grande vitesse de l'axe d'entraînement de l'électro-broche, que les contacts de l'outil avec la pièce à usiner et que les déplacements en translation suivant X, Y et Z du coulant de l'électro-broche sont, combinés ou non, responsables de vibrations importantes de l'ensemble coulant/électrobroche. Ces vibrations sont partiellement dues au fait que l'opération d'emmanchement de l'électro-broche dans le coulant nécessite un jeu de montage entre leurs surfaces de contact, le serrage ne se faisant que sur la partie avant de l'électro-broche sans maintien direct en position, du corps arrière de l'électro-broche. Il s'ensuit alors pendant les opérations d'usinage, la création de vibrations lesquelles entraînent des conséquences dommageables sur les éléments internes de l'électro-broche induisant une réduction de la durée de vie de celle-ci.

Le domaine de l'invention porte plus particulièrement sur le procédé de montage d'une électro-broche dans un coulant de machine-outil qui consiste à interposer une matière intermédiaire de remplissage entre les surfaces de contact de l'électro-broche et du coulant porte électro-broche, apte à amortir les vibrations engendrées par la rotation à grande vitesse de l'axe d'entraînement de ladite électro-broche et/ou par les mouvements en translation dudit coulant et/ou par les contacts de l'outil avec la pièce à usiner. Cette matière intermédiaire a pour rôle d'absorber l'énergie cinétique associée aux vibrations créées par les mouvements à grande vitesse de l'axe de l'électro-broche et/ou du coulant afin de limiter les contacts voire les chocs entre l'électro-broche et le coulant dommageables pour les éléments internes de ces derniers.

La susdite matière intermédiaire interposée entre les surfaces de contact de la susdite électro-broche et du susdit coulant est constituée par de l'huile qui :
- par sa nature de lubrifiant, n'attaque pas en corrosion les organes,
- par sa nature fluide, est apte à remplir le jeu nécessaire au montage de l'électro-broche aussi minime soit-il,
- par sa viscosité, est un bon amortisseur.

Un autre avantage de l'interposition d'un film d'huile entre les zones de contacts entre l'électro-broche et le coulant est qu'il évite aux micro-mouvements toujours présents dans un emmanchement cylindre/alésage de créer une corrosion "de contact" qui serait très préjudiciable pour la qualité de la liaison encastrement définie entre le coulant et l'électro-broche.

L'huile est retenue prisonnière dans une chambre étanche confinée entre les surfaces de contact de l'électro-broche et du coulant d'une part, et entre deux joints toriques réalisant l'étanchéité de l'espace séparant les deux surfaces de contact d'autre part. Ainsi, le montage de l'électro-broche dans le coulant peut se réaliser sans modification de celle-ci permettant d'utiliser une électro-broche standard. Cette caractéristique permet d'utiliser deux joints toriques, éléments standards qui, aptes à garantir l'étanchéité sur des surfaces cylindriques, assurent en outre un premier amortissement entre les surfaces de contact de l'électro-broche et du coulant du fait de sa matière de nature caoutchouteuse.

L'objet de l'invention est de proposer un coulant porte électro-broche d'une machine-outil d'usinage à grande vitesse du type de celui créant une chambre étanche délimitée entre ses surfaces de contact avec l'électro-broche et deux joints toriques réalisant l'étanchéité entre lesdites surfaces de contact à des fins de remplissage d'huile de celle-ci, afin de mettre en oeuvre ce type de procédé de montage. A cet effet, le coulant est formé de trois épaulements rentrants successifs, le premier épaulement extérieur situé à l'entrée du coulant délimitant un diamètre d'ouverture supérieur au diamètre d'ouverture des deux épaulements intérieurs suivants, de telle sorte que la portion arrière de l'électro-broche puisse être introduite avec jeu dans le coulant entre les deux derniers épaulements et être bridée sur le premier épaulement. Ainsi, les deux joints toriques réalisant l'étanchéité entre les deux surfaces de contact de l'électro-broche et du coulant avec lesquels ils délimitent le volume de la susdite chambre étanche remplie d'huile pourront être maintenus en position dans deux rainures ménagées dans les faces internes des deuxième et troisième épaulements intérieurs de telle sorte que le renflement séparant les deuxième et troisième épaulements augmente le volume de ladite chambre.

*La caractéristique principale de l'invention venant d'être évoquée ci-dessus, d'autres caractéristiques et d'autres avantages apparaîtront plus clairement* à la lecture de la description qui suit d'un mode de réalisation préférée d'un coulant porte électro-broche d'une machine-outil d'usinage à grande vitesse respectant les concepts fondamentaux de l'invention. Cette description se réfère aux dessins annexés sur lesquels

La figure 1 est une vue en perspective dépouillée illustrant la structure logique du bâti d'une machine-outil d'usinage à grande vitesse assurant les déplacements en translation d'un coulant avec son électro-broche.

La figure 2 est une vue en perspective partiellement éclatée de l'assemblage coulant/électro-broche.

Les figures 3a et 3b sont respectivement une vue en coupe schématique de l'assemblage coulant/électro-broche et une vue agrandie d'un détail du dessin de la figure 3a.

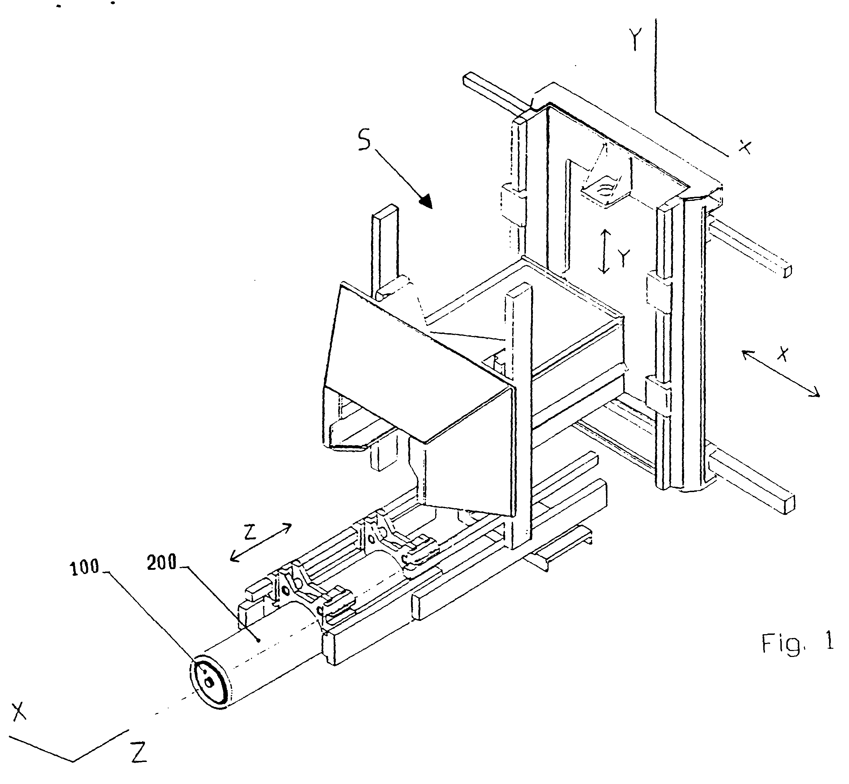

Telle qu'illustrée sur la figure 1, l'électro-broche référencée 100 dans son ensemble est fixée dans un coulant référencé 200 dans son ensemble, lequel est monté dans une structure S organisée logiquement pour assumer les déplacements à grande vitesse (flèches X, Y et Z) dudit coulant 200.

Ces différents déplacements rectilignes alternatifs (flèches X, Y et Z) sont assurés au moyen de moteurs linéaires convenablement agencés pour autoriser dans les meilleures conditions les mouvements des organes mobiles de la structure logique et notamment du coulant 200.

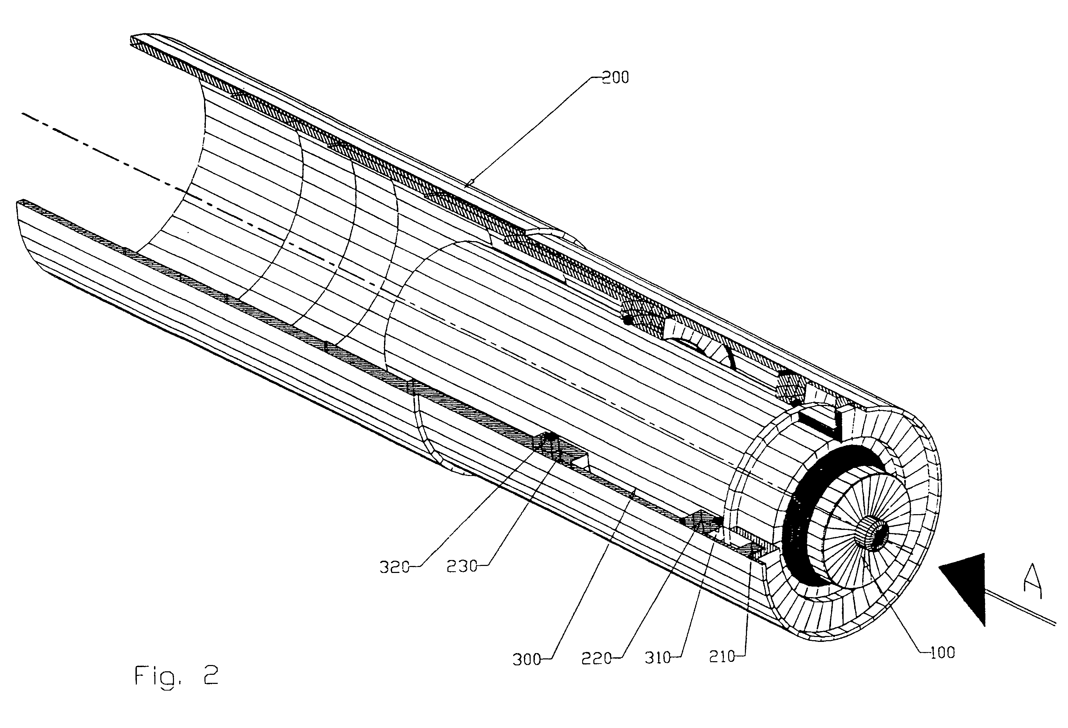

La portion avant interne du coulant 200 représenté avec son électro-broche 100 sur le dessin de la figure 2, comporte trois épaulements rentrants 210, 220 et 230 coaxiaux à l'axe longitudinal ZZ' du coulant et qui, formant des couronnes, sont disposés successivement dans le sens de pénétration (flèche A) de l'électro-broche 100 dans le coulant 200.

Le premier épaulement rentrant 210, dit épaulement extérieur car situé à l'entrée du coulant 200, est percé de trous filetés débouchants 211 disposés parallèlement à l'axe ZZ' et à intervalle angulaire régulier. Selon une disposition particulière de l'invention, le diamètre interne dudit épaulement extérieur 210 est supérieur au diamètre de la collerette d'appui 110 équipant l'électro-broche 100 pour que celle-ci ne vienne pas en butée sur ledit épaulement lors de l'emmanchement (flèche A) de l'électro-broche 100 dans le coulant 200.

Le deuxième épaulement rentrant 220, dit épaulement intermédiaire, a un diamètre interne:
- supérieur à celui du corps arrière 120 de ladite électro-broche,
- égal au diamètre interne du troisième épaulement rentrant 230, dit épaulement intérieur,
- et enfin inférieur à celui de la collerette 110 de l'électro-broche 100.

Ainsi, le montage de l'électro-broche 100 dans le coulant 200 se fait par pénétration cylindrique dans le sens de la flèche A du corps arrière 120 de ladite électro-broche dans le coulant 200, de sorte que la collerette 110 soit mise en butée sur la face avant de l'épaulement intermédiaire 220 du coulant, contre laquelle elle est retenue en position par une bride 130, laquelle bride 130 comporte une portion avant 130a traversant l'épaulement extérieur 210 et une portion arrière 130b formant un rebord fixé de façon réglable sur la face externe de l'épaulement extérieur 210 du coulant 200, via des vis 211a engagées dans les trous filetés 211. Ce mode de bridage permet au coulant 200 de communiquer à l'électro-broche 100, l'ensemble des mouvements de translation (flèches X, Y et Z) auquel il est soumis du fait de son montage dans la structure logique S (cf. figure 1). Le calage en rotation de l'électro-broche 100 dans le coulant 200 est réalisé au moyen d'ergots non représentés car n'apportant rien de plus à la bonne compréhension de l'invention.

Les deux couronnes formant les épaulements intermédiaire 220 et intérieur 230 sont ménagées dans leurs jantes internes cylindriques 221 et 231, de gorges 221a et 231a dans lesquelles viennent se loger deux joints toriques 310 et 320 aux caractéristiques identiques. La profondeur des deux gorges 221a et 231a où se logent les joints toriques 310 et 320 est telle que lors de l'emmanchement dans le sens de la flèche A de l'électro-broche 100 dans le coulant 200, le corps arrière 120 de ladite électro-broche vient en contact avec les deux joints 310 et 320, confinant ainsi avec les surfaces de contact de l'électro-broche 100 et du coulant 200, une chambre 300. Cette chambre 300 a pour objet, selon le concept fondamental de l'invention, de garantir un volume étanche entre les surfaces de contact de l'électro-broche 100 et du coulant 200, pour recevoir et garder prisonnière une matière de remplissage du jeu de montage entre les deux organes. Cette matière de remplissage qui sera constituée préférentiellement par de l'huile sert à l'amortissement des nombreuses vibrations de l'assemblage électro-broche 100/coulant 200.

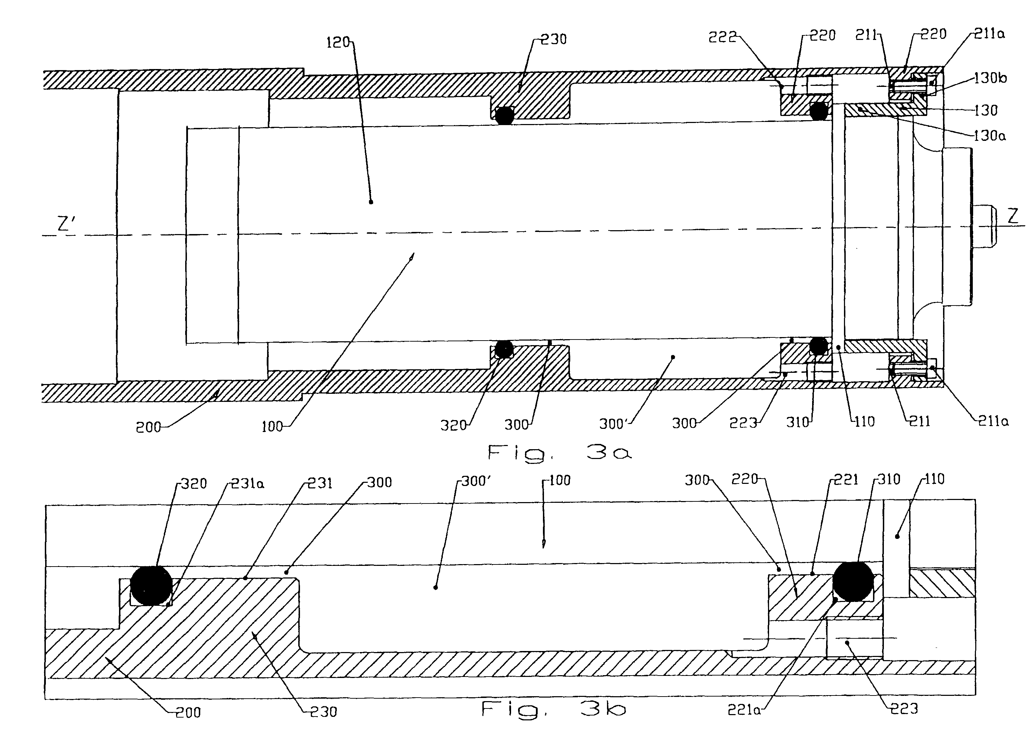

Comme montré plus en détails sur le dessin de la figure 3b, la chambre 300 comporte un renflement 300' situé entre les épaulements intermédiaire 220 et intérieur 230 du coulant 200 et dans lequel débouchent deux lumières 222 et 223 percées dans l'épaisseur de l'épaulement intermédiaire 220 et définissant la première une tubulure d'admission et la seconde une tubulure d'évacuation. Ce renflement 300' offre le grand avantage d'éviter le surfaçage de la longueur de coulant séparant les deux épaulements 220 et 230, de permettre à un grand volume d'huile de remplir la chambre étanche 300 et d'autoriser le perçage des tubulures 222 et 223 dans l'épaulement intermédiaire 220, parallèlement à l'axe ZZ'.

Avantageusement les deux tubulures d'admission 222 et d'évacuation 223 sont disposées diamétralement opposées, la première 222 étant située en haut du coulant 200 pour remplir le rôle d'évent afin de faciliter l'évacuation de l'air lors du remplissage d'huile et de son évacuation de ladite chambre étanche 300 et la deuxième 223 étant située en bas du coulant 200 pour assurer la purge et le remplissage de ladite chambre étanche 300 lors d'une quelconque opération de maintenance comme le changement de l'électro-broche 100, le renouvellement des joints toriques 310, 320 ou de l'huile.

Selon une forme de réalisation préférée de l'invention, les joints toriques 310 et 320 et donc les gorges 221a et 231a où ils sont logés, sont aménagés le plus loin possible du renflement 300' et donc l'un de l'autre, dans le but d'augmenter au maximum la surface d'amortissement entre l'électro-broche 100 et le coulant 200. En effet, il est important de rappeler que l'amortissement se fait au plus près des surfaces de contact c'est à dire dans la limite de l'épaisseur des épaulements intermédiaire 220 et intérieur 230, de sorte que la partie de la chambre remplie d'huile 300 faisant office d'amortisseur est donc limitée par l'arête interne des épaulements bordant le renflement 300' et les joints eux-mêmes. L'éloignement des gorges 221a et 231a où viennent se loger les joints est donc prépondérant pour un bon amortissement des vibrations.

On comprend que le procédé de montage et le coulant porte électro-broche permettant de le mettre en oeuvre qui viennent d'être ci-dessus décrits et représentés, l'ont été en vue d'une divulgation plutôt que d'une limitation.

## Revendications

1. Coulant porte électro-broche (200) d'une machine-outil d'usinage à grande vitesse du type de celui créant une chambre étanche (300) délimitée entre ses surfaces de contact avec l'électro-broche (100) et deux joints toriques (310, 320) réalisant l'étanchéité entre lesdites surfaces de contact à des fins de remplissage d'huile de celle-ci, **CARACTERISE PAR LE FAIT QUE** le susdit coulant (200) est formé de trois épaulements rentrants successifs (210, 220 et 230) formant couronnes, le premier épaulement extérieur (210) situé à l'entrée du coulant (200) délimitant un diamètre d'ouverture supérieur au diamètre d'ouverture des deux autres épaulements intermédiaire (220) et intérieur (230) *de telle sorte que la portion arrière de l'électro-broche puisse être introduite avec jeu dans le coulant entre les deux derniers épaulements et être bridée sur le premier épaulement.*

2. Coulant porte électro-broche (200) selon la revendication 1, **CARACTERISE PAR LE FAIT QUE** l'épaisseur de la couronne formant l'épaulement extérieur (210) du susdit coulant (200) est percée de part en part de trous filetés (211) parallèles à l'axe longitudinal (ZZ') du coulant et qui, disposés à intervalle angulaire régulier, permettent, à l'aide de vis (211a), la fixation d'une bride (130) permettant d'assurer le serrage de l'électro-broche (100) emmanchée (flèche A) dans le coulant (200).

3. Coulant porte électro-broche (200) selon les revendications 1 et 2, **CARACTERISE PAR LE FAIT QUE** les jantes cylindriques internes (221 et 231) des épaulements intermédiaire (220) et intérieur (230) du susdit coulant (200) sont ménagées de deux gorges (221a et 231a) dans lesquelles sont logés les deux joints toriques (310 et 320) réalisant l'étanchéité entre les deux surfaces de contact de l'électro-broche (100) et du coulant (200) avec lesquels ils délimitent le volume d'une chambre étanche remplie d'huile (300), de telle sorte que le renflement (300') séparant lesdits épaulements (220 et 230) augmente le volume de ladite chambre (300).

4. Coulant porte électro-broche (200) selon les revendications 1, 2 et 3, **CARACTERISE PAR LE FAIT QUE** l'épaisseur dudit épaulement intermédiaire (220) du coulant (200) est percée de part en part de deux lumières (222 et 223) dont les axes sont parallèles à l'axe (ZZ') du coulant (200) et qui, débouchant dans le renflement (300') de la susdite chambre étanche (300), définissent deux tubulures d'admission et d'évacuation d'huile dans cette dernière.

5. Coulant porte électro-broche (200) selon les revendications 1, 2, 3 et 4, **CARACTERISE PAR LE FAIT QUE** les susdits joints toriques (310 et 320) et les gorges (221a et 231a) où ils sont logés, sont aménagés le plus loin possible du susdit renflement (300').

6. Coulant porte électro-broche (200) selon la revendication 7, **CARACTERISE PAR LE FAIT QUE** les deux tubulures d'admission (222) et d'évacuation (223) sont disposées diamétralement opposées, la première (222) étant située en haut du coulant (200) pour remplir le rôle d'évent afin de faciliter l'évacuation de l'air lors du remplissage d'huile et de son évacuation de ladite chambre étanche (300) et la deuxième (223) étant située en bas du coulant (200) pour assurer la purge et le remplissage de ladite chambre étanche (300).

## Patentansprüche

1. Hülse (200) zum Halten einer Elektrospindel einer Hochgeschwindigkeits-Werkzeugmaschine, die eine dichte Kammer (300) schafft, die durch die Kontaktflächen mit der Elektrospindel (100) und zwei Runddichtringen (310, 320) begrenzt wird, die für die Dichtigkeit zwischen den genannten Kontaktflächen sorgen, um diese Kammer mit Öl füllen zu können, **dadurch gekennzeichnet**, dass die obengenannte Hülse drei nach innen gerichtete, aufeinanderfolgende Schultern (210, 220 und 230) umfasst, die Kränze bilden, wobei die erste, äußere Schulter (210), die am Eingang der Hülse (200) angeordnet ist, einen Öffnungsdurchmesser begrenzt, der größer ist als der Öffnungsdurchmesser der zwei anderen Schultern, der Zwischenschulter (220) und der inneren Schulter (230), so dass der hintere Abschnitt der Elektrospindel mit Spiel in die Hülse zwischen die beiden letzten Schultern eingefügt und an der ersten Schulter befestigt werden kann.

2. Hülse (200) zum Halten einer Elektrospindel nach Anspruch 1, **dadurch gekennzeichnet**, dass die Dicke des Kranzes, der die äußere Schulter (210) der obengenannten Hülse (200) bildet, von Löchern (211) mit Gewinde durchbohrt ist, die parallel zur Längsachse (ZZ') der Hülse in regelmäßigen Winkelabständen angeordnet sind und es erlauben, mit Hilfe von Schrauben (211a), einen Flansch (130) zu befestigen, der es ermöglicht, die in die Hülse (200) eingefügte (Pfeil A) Elektrospindel (100) zu fixieren.

3. Hülse (200) zum Halten einer Elektrospindel nach den Ansprüchen 1 und 2, **dadurch gekennzeichnet**, dass die zylindrischen Innenflächen (221 und 231) der Zwischenschulter (220) und der inneren Schulter (230) der obengenannten Hülse (200) mit zwei Rillen (221a und 231a) versehen sind, in denen die zwei Runddichtringe (310 und 320) untergebracht sind, die für die Dichtigkeit zwischen den beiden Kontaktflächen der Elektrospindel (100) und der Hülse (200) sorgen, mit denen sie das Volumen einer dichten, mit Öl gefüllten Kammer (300) begrenzen, so dass die Verdickung (300'), die die beiden Schultern (220 und 230) trennt, das Volumen der genannten Kammer (300) vergrößert.

4. Hülse (200) zum Halten einer Elektrospindel nach den Ansprüchen 1, 2 und 3, **dadurch gekennzeichnet**, dass die Dicke der genannten Zwischenschulter (220) der Hülse (200) von zwei Öffnungen (222 und 223) durchbohrt ist, deren Achsen parallel zur Achse (ZZ') der Hülse (200) sind, die in die Verdickung (300') der genannten dichten Kammer (300) münden und zwei Rohre bilden, durch die diese Kammer mit Öl gefüllt bzw. geleert wird.

5. Hülse (200) zum Halten einer Elektrospindel nach den Ansprüchen 1, 2, 3 und 4, **dadurch gekennzeichnet**, dass die obengenannten Runddichtringe (310 und 320) und die Rillen (221a und 231a), in denen sie untergebracht sind, möglichst weit von der genannten Verdickung (300') entfernt angeordnet sind.

6. Hülse (200) zum Halten einer Elektrospindel nach Anspruch 4, **dadurch gekennzeichnet**, dass das Einlassrohr (222) und das Auslassrohr (223) einander diametral entgegengesetzt angeordnet sind, wobei das erste Rohr (222) an der Oberseite der Hülse (200) vorgesehen ist, um bei der Füllung der genannten dichten Kammer (300) mit Öl und deren Entleerung als Lüftungsloch zu fungieren und das Ausstoßen von Luft zu erleichtern, während das zweite Rohr (223) an der Unterseite der Hülse (200) vorgesehen ist, um die Entleerung und das Füllen der genannten Kammer 300 zu ermöglichen.

## Claims

1. Slide-electropin holder (200) of a high speed machining machine tool of the type creating an watertight chamber (300) delimited between its contact surfaces with the electropin (100) and two toric joints (310, 320) creating the watertightness between said contact surfaces for the purpose of filling said chamber with oil, wherein the aforementioned slide (200) is comprised of three successive tucked-in shoulders (201, 220 and 230) forming crowns, the first outside shoulder (210) located at the entry of the slide (200) delimiting an opening diameter greater than the opening diameter of the two other intermediary (220) and inner (230) shoulders, so that the back part of the electropin could be introduced with some clearance into the slide between the two last shoulders and could be clamped on the first shoulder.

2. Slide-electropin holder (210) according to claim 1, wherein the thickness of the crown forming the outside shoulder (201) of the aforementioned slide (200) is pierced throughout by threaded holes (211) parallel to the longitudinal axis (ZZ') of the slide and which, placed at a regular angular interval, allow by means of screws (211a) the fixation of a bracket (130) which ensures the tightening of the electropin (100) fitted (arrow A) into the slide (200).

3. Slide-electropin holder (200) according to claims 1 and 2, wherein the inner cylindrical rims (221 and 231) of the intermediary (220) and inner (230) shoulders of the aforementioned slide (200) are provided with two slots (221a and 231a) in which are placed the two toric joints (310 and 320) ensuring the watertighteness between the two contact surfaces of the electropin (100) and of the slide (200) with which they delimit the volume of a watertight chamber filled with oil (300), so that the bulge (300') separating said shoulders (220 and 230) increases the volume of said chamber (300).

4. Slide-electropin holder (200) according to claims 1, 2 and 3, wherein the thickness of said intermediary shoulder (220) of the slide (200) is pierced throughout by two recesses (222 and 223), the axis of which are parallel to axis (ZZ') of the slide (200) and which, ending into the bulge (300') of the aforementioned watertight chamber (300), define two tubings for oil admission and evacuation into the latter.

5. Slide-electropin holder (200) according to claims 1, 2, 3 and 4, wherein the aforementioned toric joints (310 and 320) and the slots (221a and 231a) in which they are placed, are located as far as possible from the aforementioned bulge (300').

6. Slide-electropin holder (200) according to claim 4, wherein the two admission tubings (222) and the two evacuation tubings (223) are placed facing each other diametrally, the first one (222) being located at the top of the slide (200) in order to serve as a duct so as to facilitate air evacuation during the filling of oil and air evacuation from the said watertight chamber (300) and the second one (223) being located at the bottom of the slide (200) in order to ensure the purging and the filling of said watertight chamber (300).
